(19) **Europäisches Patentamt European Patent Office Office européen des brevets**

(11) **EP 1 631 795 B1**

(12) **EUROPÄISCHE PATENTSCHRIFT**

(45) Veröffentlichungstag und Bekanntmachung des Hinweises auf die Patenterteilung:
**25.07.2007 Patentblatt 2007/30**

(21) Anmeldenummer: **04701587.0**

(22) Anmeldetag: **13.01.2004**

(51) Int Cl.:
**B01J 19/00** (2006.01)    **C08G 63/78** (2006.01)

(86) Internationale Anmeldenummer:
**PCT/EP2004/000159**

(87) Internationale Veröffentlichungsnummer:
**WO 2004/065909 (05.08.2004 Gazette 2004/32)**

(54) **VERFAHREN ZUR ZUGABE DER ROHSTOFFE BEI DER HERSTELLUNG VON POLYESTERN ODER COPOLYESTERN**

METHOD FOR ADDING RAW MATERIALS DURING THE PRODUCTION OF POLYESTERS OR COPOLYESTERS

PROCEDE POUR AJOUTER DES MATIERES BRUTES AU COURS DE LA PREPARATION DE POLYESTERS OU DE COPOLYESTERS

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **23.01.2003 DE 10302535**

(43) Veröffentlichungstag der Anmeldung:
**08.03.2006 Patentblatt 2006/10**

(73) Patentinhaber: **Lurgi Zimmer GmbH 60295 Frankfurt am Main (DE)**

(72) Erfinder:
• **DEISS, Stefan 55296 Harxheim (DE)**
• **KIRSTEN, Klaus 55130 Mainz (DE)**
• **JANKO, Lutz 64390 Erzhausen (DE)**
• **RAU, Maik 50935 Köln (DE)**

(74) Vertreter: **Grünecker, Kinkeldey, Stockmair & Schwanhäusser Anwaltssozietät Maximilianstrasse 58 80538 München (DE)**

(56) Entgegenhaltungen:
**US-A- 2 974 126        US-A- 3 492 283
US-A- 5 098 667**

EP 1 631 795 B1

**Beschreibung**

Die Erfindung betrifft ein Verfahren zur Erzeugung einer Paste zur Herstellung eines Polyesters aus festen und flüssigen Rohstoffen sowie gegebenenfalls aus Zusatzstoffen mit vereinfachter Rohstoffzugabe und einem Konzept zur Regelung des Molverhältnisses der Ausgangsstoffe. Außerdem wird ein indirektes Verfahren zur Bestimmung des Rohstoffverbrauchs bei der Polyesterherstellung vorgeschlagen.

Im Sinne der vorliegenden Erfindung umfasst der Begriff "Polyester" Homopolyester und/oder Copolyester. Der Begriff Rohstoffe umfasst die beiden Monomere Dicarbonsäure und bifunktionaler Alkohol. Als Zusatzstoffe werden z. B. Katalysatoren, Inhibitoren und bei der Copolyesterherstellung Comonomere, wie z. B. Dicarbonsäuren und bifunktionale Alkohole eingesetzt. Als Ausgangsstoff wird die Gesamtheit der zur Polyesterherstellung verwendeten Roh- und Zusatzstoffe bezeichnet. Als Paste wird eine pumpfähige Suspension bezeichnet, die den überwiegenden Anteil der bei der Polyesterherstellung eingesetzten Ausgangsstoffe enthält.

Verfahren zur Herstellung von Polyestern sind bekannt. Herkömmlich werden dabei die Rohstoffe zunächst in einer Veresterungsreaktion zu einem Hydroxyalkyldicarbonsäure-Monomer- oder -Oligomer-Gemisch umgesetzt, welches nachstehend auch als teilverestertes Oligomer bezeichnet wird. Dieses teilveresterte Oligomer wird anschließend einer Vor- bzw. Prepolykondensation unterworfen, wobei ein Prepolymer und Kondensationsprodukte bzw. Reaktionsgas, im wesentlichen bifunktionale Alkohole und Wasser, erhalten werden. Dieses Prepolymer wird sodann einer Polykondensation unterworfen, um den Polymerisationsgrad des Polyesters auf den erwünschten Grad einzustellen.

Für die Gewährleistung der Prozessstabilität und einer hohen Produktqualität ist die Einstellung und Einhaltung der gewünschten Konzentrationen der Ausgangsstoffe, die zur Herstellung des Polyesters benötigt werden, von entscheidender Bedeutung. Von besonderem Interesse ist hierbei das Verhältnis der vorhandenen Hydroxylendgruppen, z. B. des bifunktionalen Alkohols, zu den Carboxylendgruppen, z. B. der Dicarbonsäure, da diese die Hauptreaktionspartner darstellen. Dieses Verhältnis wird üblicherweise als Molverhältnis bezeichnet.

Da bei der Polyesterherstellung das Polymer hauptsächlich durch Stufenwachstumsreaktionen erzeugt wird, ist das Verhältnis der beteiligten reaktiven Endgruppen zueinander ein entscheidendes Maß für die Konzentration der Reaktionspartner und somit von entscheidender Bedeutung für die Reaktionsgeschwindigkeit und die Reaktionsgleichgewichte. Im Sinne einer Herstellung von qualitativ hochwertigem Polyester ist es deshalb von großer Bedeutung, dieses Molverhältnis auf einem genau gewünschten Wert zu halten.

In herkömmlichen Prozessen zur Polyesterherstellung wird gewöhnlich aus den Rohstoffen Dicarbonsäure und bifunktionalem Alkohol eine pumpfähige Paste hergestellt, die dem weiteren Prozess zugeführt wird. Außerdem werden der Paste oder/und einer späteren Prozessstufe Zusatzstoffe zugeführt, die zu besonderen Produkteigenschaften und/oder gewünschtem Prozessverhalten führen.

Diese Paste weist ein bestimmtes Molverhältnis auf, das mit Hilfe von Regelungssystemen eingestellt und auf dem gewünschten Wert gehalten wird. Zu diesem Zweck werden die Ausgangsstoffe üblicherweise in Abhängigkeit von einem Ausgangsstoff, im allgemeinen der Dicarbonsäure, dessen Zugabegeschwindigkeit als Führungsgröße dient, zum Pastenansatzsystem derart zugegeben, dass das gewünschte Molverhältnis und die Konzentrationen der Zusatzstoffe eingehalten werden. Eine Überwachung der eingestellten Pastenzusammensetzung, insbesondere des Molverhältnisses erfolgt dabei üblicherweise offline durch in Intervallen von mehreren Stunden stattfindende Laboruntersuchungen von der Paste entnommener Proben. Die exakte Bestimmung der Menge an festen Ausgangsstoffen, vor allem der Dicarbonsäure, erfolgt dagegen in bisher bekannten Verfahren durch Wägen des pulverförmigen Rohstoffes vor Zugabe zum Prozess. Die dafür erforderlichen Waagen sind sehr teuer und erfordern eine regelmäßige Wartung. Um Produktionsausfälle zu vermeiden, ist ein entsprechend großer Vorrat der Paste zur Überbrückung von Wartungsperioden zu halten oder stand-by-Equipment für die Dosierung und Wägung der festen Dicarbonsäure bereitzustellen. Beide Varianten erfordern hohe Investitionskosten für große Pastenvorratsbehälter bzw. stand-by-Equipment.

Für die Gewährleistung der Produktqualität und die Ermittlung des Rohstoffverbrauchs ist die exakte Bestimmung der Mengen an Ausgangsstoffen, die zur Herstellung des Polyesters benötigt werden, von Bedeutung. Von besonderem Interesse sind hierbei die Rohstoffe Dicarbonsäure oder deren Ester sowie bifunktionaler Alkohol, da diese mengenmäßig die Hauptbestandteile darstellen. Die exakte Ermittlung des Verbrauchs der in flüssiger Form verwendeten Ausgangsstoffe erfolgt mit herkömmlichen Massendurchflussmessgeräten für Flüssigkeiten. Die exakte Bestimmung der Menge an festen Ausgangsstoffen, vor allem der Dicarbonsäure, erfolgt dagegen in bisher bekannten Verfahren durch Wägen des pulverförmigen Rohstoffes vor Zugabe zum Prozess. Die für eine bestimmte Menge des Endproduktes Polyester benötigte Menge eines Ausgangsstoffes wird als sein Rohstoffverbrauch bezeichnet. Die Angabe erfolgt im allgemeinen als spezifischer Verbrauch als Verhältnis von Masse des Ausgangsstoffes bezogen auf die Masse des damit hergestellten Polyesters.

Bei Verwendung einer Waage treten zeitliche Veränderungen der Messwerte des Feststoffmassenstroms auf. Diese sogenannte Drift des gemessenen Massenstroms beruht auf einer allmählichen Nullpunktsverschiebung bei der Wägung durch zunehmende Ablagerungen am Messgerät, die überwiegend durch eine geringe Restfeuchte im Feststoff verursacht werden und praktisch nicht vermieden werden können. Diese Drift wirkt sich in herkömmlichen Verfahren zwar nur wenig auf die Prozessstabilität und Regelgüte der Pastenzubereitung aus. Allerdings kommt es durch die zeitlich wegdriftende Massenbestimmung zu ungenauen Rohstoffverbrauchsmessungen. Eine periodische Rekalibrierung derartiger Waagen kann diesen Fehler nur einschränken, aber nicht ganz beseitigen.

Die US-A-5 098 667 offenbart ein Verfahren zur Herstellung von Polymeren, wobei eine flüssige Paste, die einen festen Katalysator enthält, einen Reaktor zugegeben wird. Die Dichte der Paste wird als Führungsgröße verwendet, um die Menge an Katalysator mit der flüssigen Paste zu regeln.

Aufgabe der vorliegenden Erfindung ist es daher, ein preiswertes und gleichzeitig genaues Verfahren zur verbesserten Zugabe der Rohstoffe und ein vereinfachtes Regelungskonzept zur Molverhältnisregelung bei der Herstellung von Polyester vorzuschlagen, um die vorstehend beschriebenen Probleme und Nachteile der bekannten Verfahren zu vermeiden.

Diese Aufgabe wird erfindungsgemäß durch ein Verfahren zur Erzeugung einer Paste zur Herstellung eines Polyesters aus festen und flüssigen Rohstoffen sowie gegebenenfalls aus Zusatzstoffen gelöst, das dadurch gekennzeichnet ist, daß die Regelung der Zugabegeschwindigkeit des festen Rohstoffes aufgrund der Abweichung der online gemessenen Dichte der fertigen Paste von einem Sollwert erfolgt.

Die Dichtemessung kann mit verschiedenen physikalischen Methoden erfolgen, wie zum Beispiel nach dem Coriolis-Prinzip, mittels Ultraschall, mittels Biegeschwinger o.a. Bevorzugt erfolgt dabei die Einstellung des Molverhältnisses ohne Verwendung einer Waage für den festen Rohstoff.

Als Führungsgröße für die Regelung des Molverhältnisses kann im erfindungsgemäßen Verfahren die Dichte der Paste verwendet werden. Diese wird durch Steuerung der Zugabegeschwindigkeit des festen Rohstoff im Einklang mit dem Sollwert geregelt. Der Anlagendurchsatz ist die Führungsgröße für die Regelung der Pastenaustragsgeschwindigkeit. Diese wird durch Steuerung der entsprechenden Förderorgane im Einklang mit dem Sollwert geregelt. Die Regelung des Füllstandes des Pastenansatzbehälters erfolgt durch Steuerung der Zugabemenge des flüssigen Rohstoffs. Diese kann gleichzeitig als Führungsgröße für die Regelung der Zugabegeschwindigkeit der Zusatzstoffe dienen. Außerdem kann sie als Störgröße für die Regelung der Zugabegeschwindigkeit des festen Rohstoffs aufgeschaltet werden.

In einer möglichen Ausgestaltung dieses Verfahrens werden maximal 20 %, bevorzugt maximal 10 % der Gesamtmenge des flüssigen Rohstoffs zwischen dem Pastenansatzbehälter und der Pastendichtemessung zugegeben.

In einer Ausführungsform des erfindungsgemäßen Verfahrens wird der Pastenansatzbehälter nur noch so groß ausgelegt, daß die Verweilzeit der Paste im Pastenansatzbehälters der für eine Homogenisierung der Ausgangsstoffe erforderlichen Zeit entspricht.

Auch die Ermittlung des Verbrauchs des festen Rohstoffs kann ohne Verwendung einer Waage erfolgen.

Die Vorteile des erfindungsgemäßen Verfahrens bestehen zum einen im Wegfall von wartungsintensivem und störanfälligem Equipment, und dadurch geringeren Investitions- und Wartungskosten sowie geringeren Energiekosten durch den effizienteren Eintrag der erforderlichen mechanischen Energie zur Homogenisierung der Ausgangsstoffe.

Weiterhin wird durch die geringere Verweilzeit im Pastenansatzbehälter eine kürzere Systemtotzeit erreicht, die z. B. bei Rezepturänderungen wichtig ist.

Die geregelte Zugabe eines Teilstroms des flüssigen Rohstoffs verbessert die Regelungsgüte und damit die Prozesskontrolle durch die online-Messung der Pastendichte und die online-Bestimmung des Molverhältnisses gegenüber den bisherigen Laboranalysen in mehrstündlichen oder täglichen Intervallen. Dadurch wird eine größere Prozessstabilität bei der Polyesterherstellung erreicht.

Weitere Vorteile gegenüber herkömmlichen Verfahren ergeben sich aus der Zugabe von heißem recycltem flüssigem Rohstoff direkt zur Paste bei gleichzeitiger Anhebung des in der Paste eingestellten Molverhältnisses und entsprechend reduziertem Molverhältnis der Zugabe des flüssigen Rohstoffs im weiteren Prozessverlauf. Dies verringert Energieverluste und erlaubt die Herstellung einer niederviskosen Paste (< 3 Pa*s) mit einer Temperatur oberhalb von 75 °C. Daraus ergibt sich als weiterer Vorteil die erhöhte Reaktivität der Rohstoffe in der nachfolgenden Prozessstufe, bedingt durch eine homogenere Verteilung im Reaktionsraum und längere Kontaktzeiten, gegenüber der separaten Zugabe eines großen Teils des flüssigen Rohstoffs in die nachfolgende Prozessstufe.

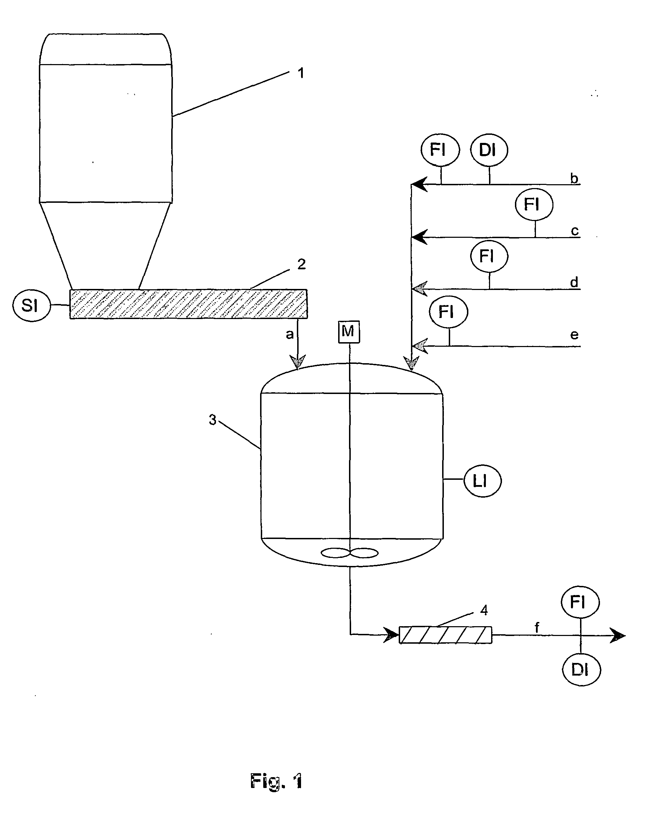

Die Erfindung wird im folgenden genauer beschrieben: Fig. 1 zeigt ein mögliches Prozessschema für eine Anlage zum Durchführen des erfindungsgemä-ßen Verfahrens. Die die Ausgangsstoffe enthaltende Paste (f) wird in Pastenansatzbehälter (3) zubereitet. Dazu wird der Rohstoff Dicarbonsäure (a), in der Regel PTA, aus einem Vorratssilo (1) mit Hilfe einer Fördereinrichtung (2), z. B. einer Zellradschleuse, Förderschnecke o. a., in den Pastenansatzbehälter (3) gefördert. Der zweite Rohstoff bifunktionaler Alkohol (b) wird zusammen mit allen anderen Zusatzstoffen (c), (d), (e) unter Messung des Mengenstroms (FI) zum Pastenansatzbehälter (3) zugegeben. Dabei ist die Anzahl der weiteren Zusatzstoffe zum Pastenansatzbehälter (3) nicht auf die hier angegebenen drei beschränkt, sondern allein von den Erfordernissen des gewünschten Endproduktes abhängig. Es ist im Sinne des erfindungsgemäßen Verfahrens auch unerheblich, auf welche Art und Weise die Ausgangsstoffe zum Pastenansatzbehälter (3) zugegeben werden. Entscheidend ist, dass von allen Ausgangsstoffen, die neben der festen Dicarbonsäure (a) zum Pastenansatzbehälter (3) zugegeben werden, der Massenstrom bestimmt wird. Dabei ist es unerheblich, ob die Massendurchflussmessung für jeden einzelnen Strom (c) - (e) oder ein Gemisch aus verschiedenen Zusatzstoffen durchgeführt wird, solange die für das Molverhältnis entscheidenden Mengen erfasst sind. Die in dem Pastenansatzbehälter (3) hergestellte Paste (g) wird mit Hilfe von mindestens einer Pumpe (4) zur weiteren Verwendung dem Prozess der Polyesterherstellung zugeführt. Dabei wird die aus dem Pastenansatzbehälter (3) ausgetragene Menge der Paste (f) durch Massendurchflussmessung (FI) bestimmt. Außerdem wird auch die Dichte der Paste bestimmt (DI). Für die Regelung des Molverhältnisses im Sinne des erfindungsgemäßen Verfahrens ist es von Bedeutung, die Menge bifunktionaler Alkohol und aller Zusatzstoffe sowie die Pastendichte online zu bestimmen.

Die Menge des Rohstoffs bifunktionaler Alkohol ist die Führungsgröße im erfindungsgemäßen Regelungskonzept. Sie wird auf den gewünschten Wert eingestellt oder durch eine weitere Regelung auf dem gewünschten Wert geregelt. Die Menge (b) wird mit einem Durchflussmesser (FI) online erfasst. Die Mengen der weiteren Zusatzstoffe zur Paste werden entsprechend den Erfordernissen der Polyesterherstellung (Rezeptur) eingestellt bzw. geregelt, um die gewünschten Konzentrationen der Zusatzstoffe einzuhalten. Die Mengen der Zusatzstoffströme werden ebenfalls mit Hilfe von Durchflussmessgeräten (FI) erfasst. Unter Kenntnis der obengenannten Größen und der Zusammensetzung der Stoffströme (aus Rezeptur und bekannten quasi-konstanten Verunreinigungen) kann die erforderliche Menge Dicarbonsäure (a) errechnet werden, die notwendig ist zur Einstellung des gewünschten Molverhältnisses. Anhand dieser Größe wird dem Geschwindigkeitsregler der Fördereinrichtung (2) der Sollwert vorgegeben. Da die Fördereinrichtung keine genaue Messaufgabe bzw. Dosierfunktion erfüllt, ist das Signal der Dichte (DI) der Paste (f) notwendig. Die Pastendichte wird als Störgröße ebenfalls dem Geschwindigkeitsregler der Fördereinrichtung (2) aufgegeben, um diese derart zu beeinflussen, dass die Fördermenge erhöht wird, wenn die Pastendichte unter den für das gewünschte Molverhältnis geforderten Wert sinkt und entsprechend umgekehrt.

Dieses Verfahren hat gegenüber herkömmlichen Regelungskonzepten, die die direkte Wägung des festen Rohstoffs erfordern den Vorteil, dass auf den Einsatz einer Waage zur Zugabe des festen Rohstoffs verzichtet werden kann. Außerdem ist durch die online Messung der Pastendichte die Regelungsgüte verbessert und die Prozessstabilität besser gewährleistet, da durch die direkte Messung der Pastendichte das gefahrene Molverhältnis online überwacht und geregelt wird, während in herkömmlichen Verfahren die Überwachung nur durch offline Laboranalysen von in mehrstündlichen Intervallen gezogenen Proben erfolgt.

Zur weiteren Verbesserung der Regelungsgüte ist es sinnvoll, neben dem Massendurchfluss auch die Dichte des Rohstoffs bifunktionaler Alkohol (b) online zu messen. Dadurch ist es möglich eventuelle Dichteschwankungen im Rohstoff, die durch Verunreinigungen, wie z. B. Wasser, erfolgen können besser zu berücksichtigen. Dies ist von besonderer Bedeutung, wenn der Rohstoff bifunktionaler Alkohol als Recycleprodukt mit möglichen leichten Qualitätsschwankungen bereits dem nachfolgenden Verfahren zur Polyesterherstellung entnommen wird.

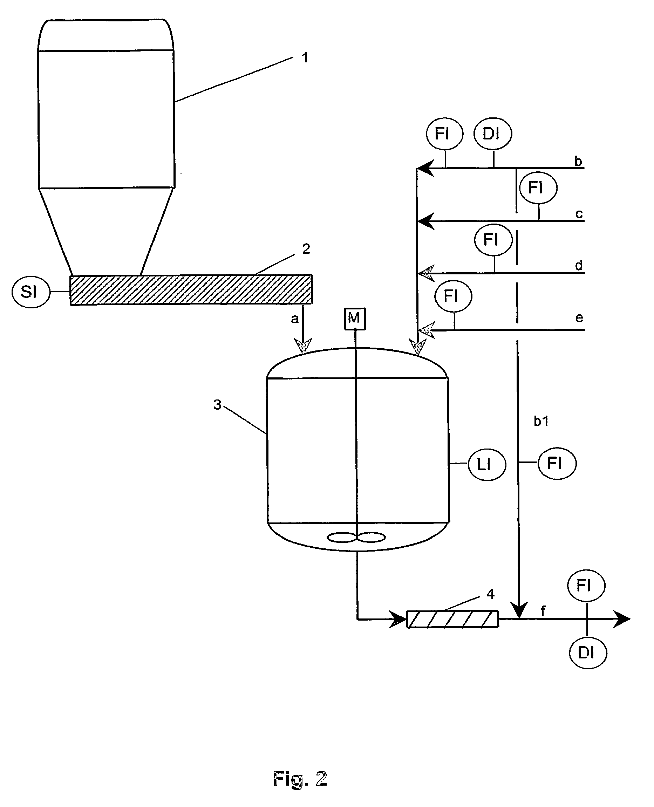

Eine weitere Verfahrensvariante zur Verbesserung der Prozessstabilität ist in Fig. 2 dargestellt. Dabei werden noch verbliebene Schwankungen in der Pastendichte, resultierend z. B. aus der Systemtotzeit des Regelkreislaufs, durch die geregelte Zugabe eines kleinen Teilstroms des Rohstoffs bifunktionaler Alkohol (b1 ≤ 10 % von b) zur Paste (f) mit dem Ziel der Feinkorrektur noch verbliebener Regelabweichungen beseitigt. Dadurch kann die Konstanz des zu regelnden Molverhältnisses noch weiter erhöht werden, was zu einer verbesserten Prozessstabilität und Produktqualität führt.

Die Regelung der erforderlichen Menge des Rohstoffs bifunktionaler Alkohol (b) kann mit Hilfe des Füllstandsreglers (LI) des Pasfienansatzbehälters (3) erfolgen, um einen gewünschten Füllstand im Pastenansatzbehälter einzuhalten. Dabei wird bei zu geringem Füllstand die zugegebene Menge des Rohstoffs bifunktionaler Alkohol (b) erhöht und entsprechend umgekehrt.

Die Menge der ausgetragenen Paste (f) kann vom Füllstandsregler des nächsten Behälters beeinflusst werden und dient außerdem als Mastersignal für die Durchsatzregelung der gesamten Anlage zur Polyesterherstellung.

Nach dem erfindungsgemäßen Verfahren wird keine Waage für die direkte Mengenerfassung des festen Rohstoffs Dicarbonsäure verwendet. Es wird deshalb folgendes Verfahren zur indirekten Bestimmung des Rohstoffverbrauchs vorgeschlagen.

Der gesuchte Rohstoffverbrauch des festen Rohstoffs Dicarbonsäure (a) ermittelt sich mit Hilfe der gemessenen Massenströme (FI) und bekanntem Inhalt des Pastenansatzbehälters (3) (LI) sowie bekannter Dichte der Paste (f) (DI) zum Beginn und zum Ende des betrachteten Zeitintervalls nach dem erfindungsgemäßen Verfahren wie folgt:

$$m_a^{\ s} = \frac{A \cdot (\rho_2 - \rho_1) + B \cdot (\rho_2 \cdot L_2 - \rho_1 \cdot L_1) + m_f - \sum\limits_k m_k}{\Delta t \cdot D \cdot \left(1 + \dfrac{A \cdot (\rho_2 - \rho_1) + B \cdot (\rho_2 \cdot L_2 - \rho_1 \cdot L_1)}{m_f}\right)} \cdot 1000 \qquad \text{(I)}$$

mit: $m_a{}^s$ - spezifischer Massenverbrauch des festen Rohstoffs (a) im betrachteten Zeitintervall $\Delta t$ in kg (a) / t Produkt

$\Delta t = (t2 - t1)$ - Zeitintervall, für das der Rohstoffverbrauch bestimmt werden soll in h

$t1$, $t2$ - Anfangs- und Endzeit des zu betrachtenden Zeitintervalls $\Delta t$ für die Ermittlung des Rohstoffverbrauchs

A, B - anlagenspezifische Konstanten

$\rho_1$, $\rho_2$ - gemessene Dichte der Paste (f) zur Zeit $t1$ bzw. $t2$ in kg/m$^3$

$L_1$, $L_2$ - gemessener Füllstand im Pastenansatzbehälter (3) zur Zeit $t1$ bzw. $t2$ in %

$m_f$ - gemessene akkumulierte Masse der Paste (f), die im Zeitintervall $\Delta t$ aus dem Pastenansatzbehälter (3) ausgetragen wurde in kg

$m_k$ - gemessene akkumulierte Massen aller weiteren Ausgangsstoffe mit k = b; c; d; e, die im Zeitintervall $\Delta t$ zum Pastenansatzbehälter (3) zugegeben wurden in kg

$D$ - Durchsatz der Anlage in kg Produkt (Polyester) / h

Für die Anwendbarkeit des Verfahrens ist es von Vorteil, wenn der Durchsatz der Anlage zur Polyesterherstellung im Zeitraum der Bestimmung des Rohstoffverbrauchs konstant ist. Ist dies nicht zu gewährleisten, kann der Anlagendurchsatz während der Verbrauchsmessung auch anderweitig bestimmt werden, z. B. durch komplette quantitative Erfassung des Endproduktes während dieses Zeitraums.

Auf Grund der hohen Genauigkeit der Messgeräte zur Massendurchfluss- und Dichtebestimmung lässt sich nachweisen, dass die bei herkömmlichen Verfahren unter Verwendung einer Waage erzielten Genauigkeiten in der Rohstoffbestimmung bei dem erfindungsgemäßen Verfahren noch übertroffen werden können.

Das erfindungsgemäße Verfahren der indirekten Feststoffbestimmung hat gegenüber herkömmlichen Verfahren desweiteren den Vorteil, dass zeitliche Veränderungen der Messwerte des Feststoffmassenstroms (Drift), wie sie bei der Wägung beobachtet werden, nicht auftreten. Auf Grund der hohen Langzeitstabilität und Zuverlässigkeit der bei der erfindungsgemäßen indirekten Massenbestimmung des Feststoffs zum Einsatz kommenden Messvertahren ist die Rohstoffverbrauchsmessung auch über lange betrachtete Zeiträume stabil und zuverlässig, was einen entscheidenden Vorteil gegenüber herkömmlichen Verfahren darstellt.

Aus dem erfindungsgemäßen Verfahren zur Zugabe des festen Rohstoffs Dicarbonsäure (a) bei der Polyesterherstellung ohne Verwendung einer Waage resultiert als weiterer entscheidender Vorteil gegenüber herkömmlichen Verfahren, dass die Bevorratung der Paste im Pastenansatzbehälter für die Überbrückung von Störungen oder Wartungsperioden der Wägeeinheit stark reduziert werden kann. Dies wird durch den Einsatz wartungsarmer Messinstrumente, die keine mechanisch beweglichen Teile enthalten ermöglicht. Für die verbliebenen mechanisch beweglichen Teile, wie z. B. Fördereinrichtungen (Schnecken-, Rohrkettenförderer, o.ä.) kann, wenn erforderlich stand-by-Equipment bereitgestellt werden, um die möglichen Stillstandzeiten bei Störungen oder Wartung weiter zu minimieren. Durch die somit erreichbaren minimalen Behältervolumina für den Pastenansatzbehälter wird nach dem erfindungsgemäßen Verfahren neben den Investitionskosten auch die Totzeit des Pastenansatzsystems erheblich reduziert. Dies wiederum wirkt sich positiv auf die Regelungsgüte bei der Pastenzubereitung und die Prozessstabilität und somit auch auf die Produktqualität aus.

Die Anwendbarkeit des erfindungsgemäßen Verfahrens wird nunmehr an Hand von Beispielen verdeutlicht.

**Beispiel 1**

Für die Herstellung von 10000 kg/h Polyethylenterephthalat Copolyester wurde der Rohstoffverbrauch der Terephthalsäure über 3 Tage (72 h) ermittelt. Es liegen folgende akkumulierte Messergebnisse für die dem Pastenansatzbehälter in 72 h zugeführten Ausgangsstoffe und die ausgetragene Paste vor:

| | | |
|---|---|---|
| Isophthalsäure | $m_{IPA}$ | 12953 kg |
| Ethylenglykol | $m_{EG}$ | 239342 kg |
| Diethylenglykol | $m_{DEG}$ | 2159 kg |
| Katalysatorlösung | $m_{KAT}$ | 17665 kg |
| Paste | $m_f$ | 878016 kg |
| Pastendichte 1 | $\rho_1$ | 1391,3 kg/m$^3$ |
| Pastendichte 2 | $\rho_2$ | 1390,7 kg/m$^3$ |
| Level 1 | $L_1$ | 80,0 % |
| Level 2 | $L_2$ | 80,1 % |

(fortgesetzt)

| | | |
|---|---|---|
| Konstante A | A | 6,8361 |
| Konstante B | B | 0,36988 |

Unter Anwendung der Gleichung (I) wird folgender PTA Verbrauch ermittelt:

$$m_a{}^s = \frac{A \cdot (\rho_2 - \rho_1) + B \cdot (\rho_2 \cdot L_2 - \rho_1 \cdot L_1) + m_f - \sum_k m_k}{\Delta t \cdot D \cdot \left(1 + \dfrac{A \cdot (\rho_2 - \rho_1) + B \cdot (\rho_2 \cdot L_2 - \rho_1 \cdot L_1)}{m_f}\right)} \cdot 1000$$

$$m_a{}^s = \frac{6,8361 \cdot (1390,7 - 1391,3) + 0,36988 \cdot (1390,7 \cdot 80,1 - 1391,3 \cdot 80,0) + 878016 - 272119}{72 \cdot 10000 \cdot \left(1 + \dfrac{6,8361 \cdot (1390,7 - 1391,3) + 0,36988 \cdot (1390,7 \cdot 80,1 - 1391,3 \cdot 80,0)}{878016}\right)} \cdot 1000$$

$$m_a{}^s = 841,5 \text{ kg PTA / t PET.}$$

Die Massendurchflussmessung und Akkumulierung der flüssigen Ausgangsstoffe und der Paste erfolgte mit Hilfe von nach dem Coriolis-Prinzip arbeitenden Messgeräten. Die IPA Menge wurde mit einer Waage gemessen.

**Beispiel 2**

Für die Herstellung von 5000 kg/h Polyethylenterephthalat Homopolyester wurde der Rohstoffverbrauch der Terephthalsäure über 8 Stunden ermittelt. Es liegen folgende akkumulierte Messergebnisse für die dem Pastenansatzbehälter in 8 Stunden zugeführten Ausgangsstoffe und die ausgetragene Paste vor:

| | | |
|---|---|---|
| Ethylenglykol | $m_{EG}$ | 14478 kg |
| Katalysatorlösung | $m_{KAT}$ | 1064 kg |
| Paste | $m_f$ | 48780 kg |
| Pastendichte 1 | $\rho_1$ | 1390,5 kg/m³ |
| Pastendichte 2 | $\rho_2$ | 1391,1 kg/m³ |
| Level 1 | $L_1$ | 50,0 % |
| Level 2 | $L_2$ | 70,0 % |
| Konstante A | A | 0,01086 |
| Konstante B | B | 0,14362 |

Unter Anwendung der Gleichung (I) wird folgender PTA Verbrauch ermittelt:

$$m_a{}^s = \frac{A \cdot (\rho_2 - \rho_1) + B \cdot (\rho_2 \cdot L_2 - \rho_1 \cdot L_1) + m_f - \sum_k m_k}{\Delta t \cdot D \cdot \left(1 + \dfrac{A \cdot (\rho_2 - \rho_1) + B \cdot (\rho_2 \cdot L_2 - \rho_1 \cdot L_1)}{m_f}\right)} \cdot 1000$$

$$m_a^{\,s} = \frac{0,01086 \cdot (1391,1 - 1390,5) + 0,14362 \cdot (1391,1 \cdot 70,0 - 1390,5 \cdot 50,0) + 48780 - 15542}{8 \cdot 5000 \cdot \left(1 + \dfrac{0,01086 \cdot (1391,1 - 1390,5) + 0,14362 \cdot (1391,1 \cdot 70,0 - 1390,5 \cdot 50,0)}{48780}\right)} \cdot 1000$$

$$m_a^{\,s} = 860,4 \text{ kg PTA} / \text{t PET.}$$

Die Massendurchflussmessung und Akkumulierung der flüssigen Ausgangsstoffe und der Paste erfolgte mit Hilfe von nach dem Coriolis-Prinzip arbeitenden Messgeräten.

**Patentansprüche**

1. Verfahren zur Erzeugung einer Paste zur Herstellung eines Polyesters aus festen und flüssigen Rohstoffen sowie gegebenenfalls aus Zusatzstoffen, **dadurch gekennzeichnet, daß** die Regelung der Zugabegeschwindigkeit des festen Rohstoffes aufgrund der Abweichung der Dichte der fertigen Paste von einem Sollwert erfolgt.

2. Verfahren nach Anspruch 1, wobei die Einstellung des Molverhältnisses ohne Verwendung einer Waage für den festen Rohstoff erfolgt.

3. Verfahren nach Anspruch 1 oder 2, wobei als Führungsgröße für die Regelung des Molverhältnisses die Dichte der Paste verwendet wird.

4. Verfahren nach Anspruch 1-3, wobei sowohl der Massendurchfluß als auch die Dichte des flüssigen Rohstoffes online gemessen wird.

5. Verfahren nach Anspruch 1-4, wobei maximal 20 %, bevorzugt maximal 10 % der Gesamtmenge des flüssigen Rohstoffes nach dem Pastenansatzbehälter und vor der Pastendichtemessung zugegeben werden.

6. Verfahren nach Anspruch 1-5, wobei die Zugabe der flüssigen Rohstoffe und Zusatzstoffe durch Messung ihrer Massendurchflüsse erfolgt.

7. Verfahren nach Anspruch 1-6, wobei die Regelung des flüssigen Rohstoffs (b-b1) durch Messung des Füllstandes des Pastenansatzbehälters erfolgt.

8. Verfahren nach einem der vorhergehenden Ansprüche, wobei die Ermittlung des Verbrauchs des festen Rohstoffs ohne Verwendung einer Waage erfolgt.

**Claims**

1. Method for the production of a paste for the manufacture of a polyester from solid and liquid raw materials and, where applicable, from additives, **characterised in that** the closed-loop control of the charging rate of the solid raw material occurs based on the deviation of the density of the prepared paste from a setpoint value.

2. Method according to Claim 1, wherein the setting of the molar ratio occurs without the application of a weighing machine for the solid raw material.

3. Method according to Claim 1 or 2, wherein the density of the paste is used as the command variable for the closed-loop control of the molar ratio.

4. Method according to Claims 1-3, wherein both the mass flow and also the density of the liquid raw material are measured on-line.

5. Method according to Claims 1-4, wherein a maximum of 20%, preferably a maximum of 10%, of the total amount of the liquid raw material is added after the paste preparation container and before the paste density measurement.

6. Method according to Claims 1-5, wherein the charging of the liquid raw materials and additives occurs by measurement of their mass flows.

7. Method according to Claims 1-6, wherein the closed-loop control of the liquid raw material (b-b1) occurs by measurement of the filling level of the paste preparation container.

8. Method according to one of the previous claims, wherein the determination of the consumption of the solid raw material occurs without the application of a weighing machine.

**Revendications**

1. Procédé de préparation d'une pâte destinée à produire un polyester à partir de matières premières solides et liquides ainsi que, le cas échéant, à partir d'additifs, **caractérisé en ce que** la vitesse d'ajout de la matière première solide est régulée en fonction de la variation de la densité de la pâte finie par rapport à une valeur théorique.

2. Procédé selon la revendication 1, dans lequel l'ajustement du rapport molaire se fait sans utiliser de balance pour la matière première solide.

3. Procédé selon la revendication 1 ou la revendication 2, dans lequel la densité de la pâte est utilisée en tant que grandeur de référence pour réguler le rapport molaire.

4. Procédé selon les revendications 1 à 3, dans lequel le débit massique ainsi que la densité de la matière première liquide sont mesurés en ligne.

5. Procédé selon les revendications 1 à 4, dans lequel au maximum 20%, de préférence au maximum 10% de la quantité totale de la matière première liquide sont ajoutés après le récipient de préparation de la pâte et avant la mesure de la densité de la pâte.

6. Procédé selon les revendications 1 à 5, dans lequel l'ajout des matières premières liquides et des additifs se fait en mesurant leurs débits massiques.

7. Procédé selon les revendications 1 à 6, dans lequel la régulation de la matière première liquide (b-b1) se fait en mesurant le niveau de remplissage du récipient de préparation de la pâte.

8. Procédé selon l'une des revendications précédentes, dans lequel la détermination de la consommation de la matière première solide se fait sans utiliser de balance.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5098667 A